# EUROPÄISCHE PATENTANMELDUNG

(11) **EP 4 012 514 A1**
(43) Veröffentlichungstag der Anmeldung: **15.06.2022**
(21) Anmeldenummer: 20213346.8
(22) Anmeldetag: 11.12.2020
(51) Int. Cl.: G05B 15/02

(54) **VERFAHREN ZUM ERSTELLEN EINES BETRIEBSPLANS ZUR STEUERUNG VON ENERGIEKOMPONENTEN EINER GEBÄUDEINFRASTRUKTUR**

(71) Anmelder: Siemens Aktiengesellschaft, 80333 München (DE)
(72) Erfinder: Heinisch, Alexander, 2124 Kreuzstetten (AT); Lechner, Daniel, 2170 Poysdorf (AT); Schütz, Thomas, 90762 Fürth (DE)
(74) Vertreter: Maier, Daniel Oliver

(57) **Zusammenfassung**

Die Erfindung betrifft ein Verfahren zum Erstellen eines Betriebsplans zur Steuerung und Regelung von Energiekomponenten (EN1, EN2) zumindest eines Gebäudes bzw. einer Gebäudeinfrastruktur mittels eines Energiemanagementsystems. Vom Betriebsplan wird für die jeweiligen Energiekomponenten (EN1, EN2) der Gebäudeinfrastruktur ein geplanter und/oder voraussichtlicher Energiebedarf in einem festgelegten, zukünftigen Zeithorizont beschrieben und für die Steuerung bzw. Regelung der Energiekomponenten (EN1, EN2) der Gebäudeinfrastruktur den jeweiligen Energiekomponenten (EN1, EN2) Sollwerte vorgegeben. Dabei werden zum Erstellen des Betriebsplans folgende Schritte durchlaufen:
- Identifizieren (101) von Energiekomponenten (EN1, EN2) der Gebäudeinfrastruktur, welche einen identen Komponententyp aufweisen;
- Zusammenfassen (102) der jeweiligen, mit identem Komponententyp identifizierten Energiekomponenten (EN1, EN2) zu einer jeweils zugehörigen Ersatzkomponente (SUB);
- Ersetzen (103) der jeweiligen, mit identem Komponententyp identifizierten Energiekomponenten (EN1, EN2) durch die jeweils zugehörige Ersatzkomponente (SUB);
- Erstellen (104) des Betriebsplans mittels des Energiemanagementsystems, wobei Sollwerte für jene Ersatzkomponenten (SUB) ermittelt werden, welche die jeweiligen, mit identem Komponententyp identifizierten Energiekomponenten (EN1, EN2) ersetzen; und
- Ableiten (105) der Sollwerte (SW1, SW2) für die Steuerung der jeweiligen, mit identem Komponententyp identifizierten Energiekomponenten (EN1, EN2) aus den für die jeweils zugehörigen Ersatzkomponenten (SUB) ermittelten Sollwerten (SWS).

## Beschreibung

### Technisches Gebiet

Die gegenständliche Erfindung betrifft allgemein das Gebiet der Gebäudetechnik und Gebäudeautomation, insbesondere das Gebiet des Energiemanagements. Im Speziellen bezieht sich die vorliegende Erfindung auf ein Verfahren zur Ermittlung eines Betriebsplans zur Steuerung und Regelung von Energiekomponenten einer Gebäudeinfrastruktur bzw. eines Energiesystems mittels eines Energiemanagementsystems. Vom Betriebsplan, welcher mittels des Energiemanagementsystems für einen festgelegten, zukünftigen Zeithorizont automatisiert erstellt wird, wird für die jeweiligen Energiekomponenten der Gebäudeinfrastruktur ein geplanter und/oder voraussichtlicher Energiebedarf im festgelegten, zukünftigen Zeithorizont beschrieben und für die Steuerung bzw. Regelung der Energiekomponenten der Gebäudeinfrastruktur den jeweiligen Energiekomponenten Sollwerte vorgegeben.

### Stand der Technik

Heutzutage sind viele moderne und/oder modernisierte Gebäude, insbesondere im kommerziellen und/oder öffentlichen Bereich, aber auch im privaten Bereich mit Gebäudeautomationssystemen ausgestattet. Ein derartiges Gebäudeautomationssystem kann eine Infrastruktur umfassen, welche einem Betrieb des jeweiligen Gebäudes zugrunde liegt. Zu einer derartigen Infrastruktur gehören beispielsweise Energiekomponenten mit unterschiedlichem Komponententyp, wie z.B. elektrische und/oder thermische Speicher oder Energiespeicher (z.B. Wärmspeicher, Batterien, etc.), Wärmepumpen, Kühlungssysteme, Energieerzeugungseinrichtungen (z.B. Photovoltaikanlagen, Blockheizkraftwerke, kleine Windkraftanlagen, etc.) sowie entsprechende Kommunikations- und/oder Steuereinrichtungen für eine entsprechende Steuerung und Regelung der Energiekomponenten.

Idealerweise umfassen derartige Gebäudeautomationssysteme heutzutage ein Energiemanagementsystem (abgekürzt: EMS), durch welches eine vorausschauende, organisierte und/oder systematisierte Koordination von Beschaffung, Wandlung, Verteilung und/oder Nutzung von Energie - beispielsweise von Wärme, Kälte und/oder elektrischer Energie - zur Deckung der Anforderungen umfasst wird. Dabei ist es wichtig, dass auch ökologische und/oder ökonomische Zielsetzungen durch das Energiemanagement berücksichtigt werden. Die wesentliche Aufgabe eines Energiemanagementsystems ist dabei eine energieeffiziente Steuerung und Regelung der Energiekomponenten der Gebäudeinfrastruktur (Energiesystem), ein Schutz der Energiekomponenten der Gebäudeinfrastruktur sowie eine Bereitstellung eines angeforderten Komforts (z.B. Regelung der Raumtemperatur eines Raums des Gebäudes, Versorgung mit elektrischer Energie, etc.). Derartige Energiemanagementsysteme sind beispielsweise aus der Schrift EP 3 340 415 A1 oder aus der Schrift WO 2020/200588 A1 bekannt.

Dabei ist eine der wesentlichen Aufgabe eines Energiemanagementsystems eine Koordination von energiesysteminterner Erzeugung einer Energieform und von einem energiesysteminternen Verbrauch einer Energieform. Energieformen können z.B. thermische Energie, insbesondere Wärme oder Kälte, elektrische Energie oder chemische Energie sein. Vor allem beim Einsatz von erneuerbar erzeugten Energieformen (wie z.B. mittels Photovoltaik- und/oder kleinen Windkraftanlagen erzeugter elektrischer Energie, mittels Wärmepumpen erzeugter thermischer Energie, etc.), beim Einsatz von Energiespeichern und/oder von steuerbaren und/oder regelbaren Lasten (wie z.B. einem Laden/Entladen von Batterien von Elektrofahrzeugen, Wärmespeichern, etc.) ist eine Steuerung und Regelung der Energiekomponenten mittels eines Energiemanagementsystems vorteilhaft.

Dazu kann ein Energiemanagementsystem elektrische Messungen, eine Überwachung der Gebäudeinfrastruktur bzw. Energiekomponenten des Energiesystems sowie eine Datenanalyse- und/oder Prognoseverfahren umfassen, welche beispielsweise ein Erstellen eines Betriebsplans zur Steuerung und/oder Regelung steuerbarer Energiekomponenten ermöglichen. Der Betriebsplan beschreibt dabei für die jeweilige Energiekomponente der Gebäudeinfrastruktur bzw. des Energiesystems einen geplanten und/oder voraussichtlichen - ebenfalls positiven oder negativen - Energiebedarf dieser Energiekomponente in einem festgelegten, zukünftigen Zeithorizont (z.B. 24 Stunden im Voraus). Dabei können beispielsweise sowohl jeweilige technische Restriktionen als auch Umgebungsbedingungen der jeweiligen Energiekomponente, wie beispielsweise eine Sonnenscheindauer, während der die Photovoltaikanlage beschienen wird und Strom liefern kann, sowie weitere Größen und Parameter (z.B. Ladekapazität und/oder Energieinhalt eines Energiespeichers, etc.) berücksichtigt werden.

Mit Hilfe des Betriebsplans können die Energiekomponenten des Energiesystem für den festgelegten, zukünftigen Zeithorizont für ein effizientes Energiemanagement der Gebäudeinfrastruktur entsprechend gesteuert und geregelt werden. Vom Energiemanagementsystem können z.B. Analysen aufgezeichneter historischer Energiedaten, Erfahrungswerte z.B. aufgrund von Tageszeit, Jahreszeit, etc., Lastprofilen und/oder Vorhersagedaten zu Verbrauch und Erzeugung von Energie im Energiesystem herangezogen werden, um für den festgelegten, zukünftigen Zeithorizont eine Prognose von Bereitstellung und Bedarf für eine oder mehrere Energieformen (z.B. Wärme, Kälte, elektrische Energie) zu ermitteln. Auf dieser Prognose basierend kann automatisiert der Betriebsplan für das Energiesystem bzw. für die einzelnen, steuerbaren bzw. regelbaren Energiekomponenten des Energiesystems erstellt werden. Der festgelegte, zukünftige Zeithorizont (z.B. 24 Stunden im Voraus) kann z.B. in vorgebbare Zeitschritte (z.B. pro Minute, pro Stunde, etc.) unterteilt werden. Den jeweiligen Energiekomponente des Energiesystems können dann beispielsweise pro vorgegebenen Zeitschritte Sollwerte (z.B. für zuliefernde, zu speichernde und/oder zu verbrauchende Energie) vorgegeben werden, um einen effizienten und optimalen Betrieb des Energiesystems bzw. der Gebäudeinfrastruktur zu erreichen.

Ein automatisiertes Finden und Erstellen eines optimalen Betriebsplans für alle steuerbaren und/oder regelbaren Energiekomponenten eines Energiesystems (z.B. Wärmepumpen, Wärmespeicher, Batterien, steuerbare Verbraucher, wie z.B. E-Mobility-Ladestationen, etc.) stellt für das Energiemanagementsystem ein komplexes Optimierungsproblem dar, welches stark von der Komplexität bzw. einer Anzahl an steuer- und/oder regelbaren Energiekomponenten des Energiesystems sowie deren Wechselwirkungen untereinander abhängt und welches dadurch große Auswirkungen auf Eigenschaften und Struktur des Energiemanagementsystems haben kann. Davon können z.B. Dauer der Ermittlung bzw. Berechnung des Betriebsplans, ein für die Berechnung notwendiger Ressourcen- bzw. Speicherbedarf genauso abhängen, wie z.B. eine Qualität des ermittelten Betriebsplans in Bezug auf zeitliche Auflösung oder gefundene Lösung (z.B. vorzeitig abgebrochene Berechnung wegen z.B. Zeitüberschreitung, zu geringer Ressourcen, etc.), Nachvollziehbarkeit und Wartbarkeit. Eventuell können auch Kapazitäten für eine Datenübertragung dadurch beeinflusst werden, falls der Betriebsplan auf einem fernen Rechner bzw. mittels einer so genannten Cloud-Computing-Lösung ermittelt wird.

Bei Energiesystemen bzw. einer Gebäudeinfrastruktur mit einer geringen Komplexität bzw. mit einer geringen Anzahl an steuerbaren bzw. regelbaren Energiekomponenten gibt es üblicherweise kaum bzw. nur geringe Auswirkungen auf die Qualität des erstellten Betriebsplans und damit auf die Steuerung und Regelung der Energiekomponente. Allerdings steigt die Komplexität zur Ermittlung eines optimalen und energieeffizienten Betriebsplan mit jeder neuen Energiekomponente stark an, welche vom Energiemanagementsystem im zu erstellenden Betriebsplan berücksichtigt werden muss. Neu vom Energiemanagementsystem zu berücksichtigende Energiekomponenten haben damit bei der Erstellung eines optimalen Betriebsplans vor allem auf die Dauer der Erstellung, die Qualität des Betriebsplans und den Ressourcenbedarf/-verbrauch des Energiemanagementsystems einen erheblichen Einfluss. Bei komplexen Energiesystemen mit einer Vielzahl an steuerbaren bzw. regelbaren Energiekomponenten, welche zusätzlich modular und/oder redundant ausgeführt sein können, treten daher nicht selten z.B. Probleme bei der Dauer der Berechnung des Betriebsplans, Qualitätsprobleme beim erstellten Betriebsplan und/oder Ressourcenprobleme bei der Erstellung des Betriebsplans (z.B. zu hoher Speicherverbrauch, etc.) auf.

Eine Möglichkeit, derartige Probleme zumindest zu reduzieren, besteht z.B. darin für die Ermittlung des optimalen Betriebsplans für das Energiemanagement die im Energiemanagementsystem eingesetzten Ressourcen (z.B. Speichereinheiten, Hardwareeinheiten, Rechenkapazitäten, etc.) zu erhöhen. Diese Möglichkeit weist allerdings den Nachteil auf, dass sie mit höheren Investitionskosten sowie höheren laufenden Betriebskosten verbunden ist. Weiterhin kann diese Möglichkeit zumeist nur am Projektbeginn bzw. bei Aufbau eines neuen Energiemanagementsystems genutzt werden. Eine entsprechende Aufrüstung bestehender Systeme ist nachträglich oft nur schwer bzw. mit großen Aufwendungen verbunden.

Eine andere Möglichkeit einen optimalen Betriebsplan für eine komplexes Energiesystem ohne Berechnungs- und/oder Ressourcenprobleme (z.B. abgebrochene Berechnung wegen Zeitüberschreitung, zu lange Berechnungsdauer, etc.) mittels eines Energiemanagementsystems zu erstellen, stellt z.B. eine Reduktion der zeitlichen Auflösung des Betriebsplans dar. D.h., die Anzahl der Zeitschritten, für welche eine Berechnung durchgeführt und für welche Sollwerte der steuerbaren bzw. regelbaren Energiekomponenten ermittelt werden, wird z.B. mittels manueller Eingabe reduziert. Es wird beispielsweise nur noch ein Sollwert pro Stunde für die Energiekomponenten anstatt eines Sollwerts pro Minute bestimmt. Alternativ oder zusätzlich, kann auch der festgelegte, zukünftige Zeithorizont verringert werden, für welchen der erstellte Betriebsplan gilt - d.h. z.B. ein Betriebsplan für die nächste Stunde anstatt für die nächsten 24 Stunden. Die Reduktion der Zeitschritte für den Zeithorizont des Betriebsplans wie eine Verkürzung des Zeithorizonts selbst führen allerdings zu einer ungenaueren Planung und damit zu einer Verschlechterung des Betriebsplans z.B. in Bezug auf Energieeffizienz, Schutz der Infrastruktur und einer schlechteren Steuerung und/oder Regelung des Energiesystems bzw. der einzelnen Energiekomponenten.

### Darstellung der Erfindung

Der Erfindung liegt daher die Aufgabe zugrunde, ein Verfahren zum Erstellen eines Betriebsplan zur Steuerung von Energiekomponenten einer Gebäudeinfrastruktur bzw. eines Energiesystems anzugeben, durch welches auf kostengünstige und ressourcenschonende Weise Betriebspläne, insbesondere für komplexe Energiesysteme, mit höherer Qualität und/oder zeitlicher Auflösung erstellt werden.

Diese Aufgabe wird durch ein Verfahren eingangs genannter Art mit den Merkmalen des unabhängigen Patentanspruchs gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren eingangs erwähnter Art, bei welchem zum Erstellen eines Betriebsplans zur Steuerung von Energiekomponenten einer Gebäudeinfrastruktur bzw. eines Energiesystems mittels eines Energiemanagementsystems folgende Schritte durchlaufen werden:
- Identifizieren von Energiekomponenten der Gebäudeinfrastruktur, welche einen identen Komponententyp aufweisen;
- Zusammenfassen jener Energiekomponenten zu einer zugehörigen Ersatzkomponente, für welche ein identer bzw. derselbe Komponententyp identifiziert wurde;
- Ersetzen der jeweiligen, mit identem Komponententyp identifizierten Energiekomponenten durch die jeweils zugehörige Ersatzkomponente für die Erstellung des Betriebsplans durch das Energiemanagementsystems;
- Erstellen des Betriebsplans mittels des Energiemanagementsystems, wobei für jede Ersatzkomponente (SUB), welche jeweils mit identem Komponententyp identifizierten Energiekomponenten (EN1, EN2) ersetzt, zumindest ein Sollwert ermittelt wird; und
- Ableiten der Sollwerte für die jeweiligen, mit identem Komponententyp identifizierten Energiekomponenten aus dem zumindest einen für die jeweils zugehörige Ersatzkomponente ermittelten Sollwert, wobei die jeweiligen Einschränkungen der jeweiligen Energiekomponente des identen Komponententyps berücksichtigt werden (z.B. maximal erlaubter Ladezustand eines Batterieeinheit, maximal mögliche Speicherkapazität, etc.), welche in der Ersatzkomponente zusammengefasst wurden.
Vom Betriebsplan wird dabei für die jeweiligen Energiekomponenten ein geplanter und/oder voraussichtlicher Energiebedarf in einem festgelegten, zukünftigen Zeithorizont beschrieben und es werden für die Steuerung der Energiekomponenten den jeweiligen Energiekomponenten Sollwerte vorgegeben. Dabei kann der Energiebedarf einer Energiekomponente je nach Komponenten positiv und/oder negativ sein - je nachdem ob Energie erzeugt bzw. geliefert oder verbraucht bzw. gespeichert wird.

Der Hauptaspekt der vorliegenden Erfindung besteht darin, dass für die Erstellung des Betriebsplans jene Energiekomponenten der Gebäudeinfrastruktur automatisiert zusammengefasst werden, bei welchen festgestellt wurde, dass diese Energiekomponenten einen identen Komponententyp (z.B. thermische Speichereinheit, Batteriespeicher, Wärmepumpe, etc.) aufweisen und daher durch eine entsprechende, zugehörige Ersatzkomponente ersetzt werden können. Insbesondere bei komplexen Gebäudeinfrastrukturen bzw. Energiesystemen, in welchen viele Energiekomponenten zum Einsatz kommen und einige der Energiekomponenten modular und/oder redundant ausgeführt sind (z.B. mehrere thermische Speicher, mehrere Batteriespeicher oder mehrere Wärmepumpen) kann durch die vorliegende Erfindung zu eine erhebliche Reduktion des Optimierungsproblems erreicht werden, ohne großen Einfluss auf die Qualität des Ergebnisses bzw. des Betriebsplans zu nehmen. Für komplexe Energiesystem mit vielen und teilweise modular und/oder redundant ausgeführten Energiekomponenten können erst durch die vorliegende Erfindung ressourcenschonend und kostengünstig Betriebspläne für einen festgelegten, zukünftigen Zeithorizont erstellt und mittels des Energiemanagements ausgeführt werden.

Weiterhin kann durch die vorliegende Erfindung, insbesondere durch die Abstraktion, die Kombination bzw. das Zusammenfassen von Energiekomponenten gleichen Komponententyps zu Ersatzkomponenten (z.B. mehrere Batterieeinheiten oder mehrere thermische Speichereinheiten werden zu einer entsprechenden Ersatzkomponente zusammengefasst), eine Reduktion des Ressourcenbedarfs beim Erstellen des Betriebsplan zur Steuerung der Energiekomponenten der Gebäudeinfrastruktur bzw. des Energiesystems erreicht werden. Gegebenenfalls freiwerdende Ressourcen im Energiemanagementsystem können dann idealerweise eingespart bzw. für einen Betrieb mit erhöhten Taktzyklen verwendet werden. Bei einem Betrieb mit erhöhten Taktzyklen kann das Energiemanagementsystem beispielsweise schneller auf Sollwertabweichungen und Vorhersagefehler bei der Steuerung bzw. Regelung der Energiekomponenten reagieren.

Eine zweckmäßige Weiterbildung der Erfindung sieht vor, dass beim Zusammenfassen der jeweiligen, identifizierten Energiekomponenten mit identem Komponententyp zur jeweils zugehörigen Ersatzkomponente zumindest ein Parameter der Ersatzkomponenten aus entsprechenden Parametern der jeweiligen, identifizierten Energiekomponenten mit identem Komponententyp berechnet wird. Durch das Ableiten zumindest eines oder mehrerer Parameter der Ersatzkomponente aus den kennzeichnenden Parametern bzw. Kennwerten der Energiekomponenten mit identem Komponententyp - wie z.B. Speicherkapazität, Energieinhalt, max. zulässiger Speicherkapazität, Energielieferleistung, etc. - kann die Ersatzkomponente die jeweiligen, identifizierten Energiekomponenten, welche durch die Ersatzkomponente für die Erstellung des Betriebsplans ersetzt werden, möglichst genau und realistisch nachbilden. So können beispielsweise Speicherkapazitäten von Energiekomponenten des Komponententyps Batterie für die entsprechende, zugehörige Ersatzkomponente, welcher ebenfalls den Komponententyp Batterie aufweist, verwendet werden, um z.B. mittels Summation die Speicherkapazität der Ersatzkomponente zu ermitteln.

Idealerweise kann beim Ableiten der Sollwerte der jeweiligen, identifizierten Energiekomponenten mit identem Komponententyp aus dem für die jeweils zugehörige Ersatzkomponente ermittelten Sollwert eine Alterung der jeweiligen, identifizierten Energiekomponente berücksichtigt werden. Weiterhin ist es auch von Vorteil, wenn beim Ableiten der Sollwerte der jeweiligen, identifizierten Energiekomponenten mit identem Komponententyp aus dem für die jeweils zugehörige Ersatzkomponente ermittelten Sollwert eine jeweilige Einsatzdauer der jeweiligen, identifizierten Energiekomponente berücksichtigt wird.

Auf diese Weise können in den Sollwerten der einzelnen Energiekomponenten zusätzliche Effekt, wie z.B. Alterung, Einsatzdauer und/oder unterschiedliche Betriebsstunden der jeweiligen Energiekomponente, berücksichtigt werden. Derartige Effekte und Einflüsse werden üblicherweise aufgrund limitierter Ressourcen von Energiemanagementsystemen bei der Erstellung des Betriebsplans bzw. dem zugehörigen Optimierungsproblem nicht modelliert bzw. berücksichtigt. Durch eine der Erstellung des Betriebsplans nachgelagerte Ableitung der Sollwerte für die jeweiligen, identifizierten einzelnen Energiekomponenten aus zumindest einem für die zugehörige Ersatzkomponente im Betriebsplan ermittelten Sollwert können Effekte, wie z.B. Alterung, unterschiedliche Einsatzdauer und/oder unterschiedliche Betriebsstunden der jeweiligen Energiekomponenten berücksichtigt werden. Weiterhin beeinflusst damit die Berücksichtigung dieser Effekte weder eine Rechenzeit für den Betriebsplan noch einen Ressourcen- bzw. Speicherbedarf des Energiemanagementsystems beim Erstellen des Betriebsplans. Da beim Ableiten der Sollwerte der jeweiligen, identifizierten Energiekomponenten aus dem zumindest einen für die jeweils zugehörige Ersatzkomponente ermittelten Sollwert vom Energiemanagementsystem immer nur eine sehr kleine Anzahl an kleinen Anzahl von Energiekomponenten des Energiesystems berücksichtigt werden, ist die Komplexität diese Aufgabe entsprechend gering und damit auch der zugehörige Ressourcen- und Rechenaufwand.

Zweckmäßigerweise wird vom Energiemanagementsystem das Erstellen des Betriebsplans mit Hilfe einer modellprädiktiven Regelung durchgeführt. Die modellprädiktive Regelung bzw. auch Model Predictive Control (MPC) ist eine moderne Methode zur prädiktiven Regelung von komplexen und in der Regel multivariablen Prozessen, wie z.B. dem Erstellen eines optimalen Betriebsplans für ein komplexes Energiesystem mit mehreren, steuerbaren Energiekomponenten. Bei der modellprädiktiven Regelung wird idealerweise z.B. für den festgelegten, zukünftigen Zeithorizont (z.B. 24 Stunden im Voraus) des zu erstellenden Betriebsplans mit diskreten Zeitabschnitten (z.B. Minuten, Stunden) sowohl intern als auch im Ergebnis gearbeitet. D.h. es wird z.B. ein zeitdiskretes dynamisches Modell des zu regelnden Prozesses (z.B. Optimierung des Betriebsplans des Energiesystems) verwendet, um das zukünftige Verhalten des Prozesses in Abhängigkeit von Eingangswerten zu berechnen. Dies ermöglicht eine Berechnung des - z.B. im Sinne einer Gütefunktion - optimalen Eingangswertes, welche zu optimalen Ausgangswerten führen.

Idealerweise werden zum Erstellen des Betriebsplans und zum Ermitteln der Sollwerte für die jeweiligen Ersatzkomponenten mittels des Energiemanagementsystems historische Energieerzeugungsdaten und/oder Energiebedarfsdaten, Erfahrungswerte und/oder Vorhersagedaten der Energiekomponenten herangezogen. Auf Basis dieser Daten können beispielsweise Prognosen für einen Energiebedarf - d.h. für einen Verbrauch und/oder eine Energieerzeugungsmenge/-liefermenge - der jeweiligen Energiekomponente des Energiesystem für den festgelegten, zukünftigen Zeithorizont (z.B. die nächsten 24 Stunden, den nächsten Tag, etc.) erstellt werden. Derartige Prognosen und Schätzungen können dann z.B. als Basis für die Erstellung des Betriebsplans für den festgelegten, zukünftigen Zeithorizont bzw. für die modellprädiktive Regelung vom Energiemanagementsystem verwendet werden.

Es ist weiterhin vorteilhaft, wenn als Komponententypen der Energiekomponenten der Gebäudeinfrastruktur zumindest thermische und/oder elektrische Energieerzeugungseinheiten, wie z.B. Wärmepumpe, Photovoltaikanlagen, etc., und/oder thermische und/oder elektrische Energiespeichereinheiten (z.B. Wärmespeicher, Batterie, etc.) betrachtet werden. Dabei können die Energiespeichereinheiten beispielsweise als steuerbare Lasten (z.B. Speichereinheiten für E-Mobilität, etc.) ausgeführt sein. Derartige Energiekomponenten der Gebäudeinfrastruktur bzw. des Energiesystems sind bei komplexen Energiesystemen häufig modular und/oder redundant ausgeführt und können beispielsweise sehr einfach zu Ersatzkomponenten zusammengefasst werden. So können beispielsweise Energiekomponenten eines Komponententyps "Energiespeichereinheit", wie z.B. Batterien oder Wärmespeicher, etc. mit jeweiligen Speicherkapazitäten, Energieinhalten, etc. für die Erstellung des Betriebsplans sehr einfach zu einer entsprechenden Ersatzeinheit - z.B. einer Ersatzenergiespeichereinheit - zusammengefasst werden, welche als Speicherkapazität, Energieinhalt, etc. eine Gesamtspeicherkapazität, einen Gesamtenergieinhalt, etc. der einzelnen ersetzten Energiespeichereinheiten aufweist.

### Kurzbeschreibung der Zeichnung

Die Erfindung wird nachfolgend in beispielhafter Weise anhand der beigefügten Figuren erläutert. Es zeigen:
Figur 1 einen schematischen und beispielhaften Ablauf des erfindungsgemäßen Verfahrens zum Erstellen eines Betriebsplans zur Steuerung bzw. Regelung von Energiekomponenten einer Gebäudeinfrastruktur mittels eines Energiemanagementsystems;
Figur 2a beispielhaft ein Zusammenfassen von Energiekomponenten des Gebäudemanagementsystems mit identem Komponententyp zu einer zugehörige Ersatzkomponente;
Figur 2b beispielhaft ein Ableiten der Sollwerte der jeweiligen Energiekomponenten identem Komponententyps dem im Betriebsplan ermittelten Sollwert der zugehörigen Ersatzkomponente.

### Ausführung der Erfindung

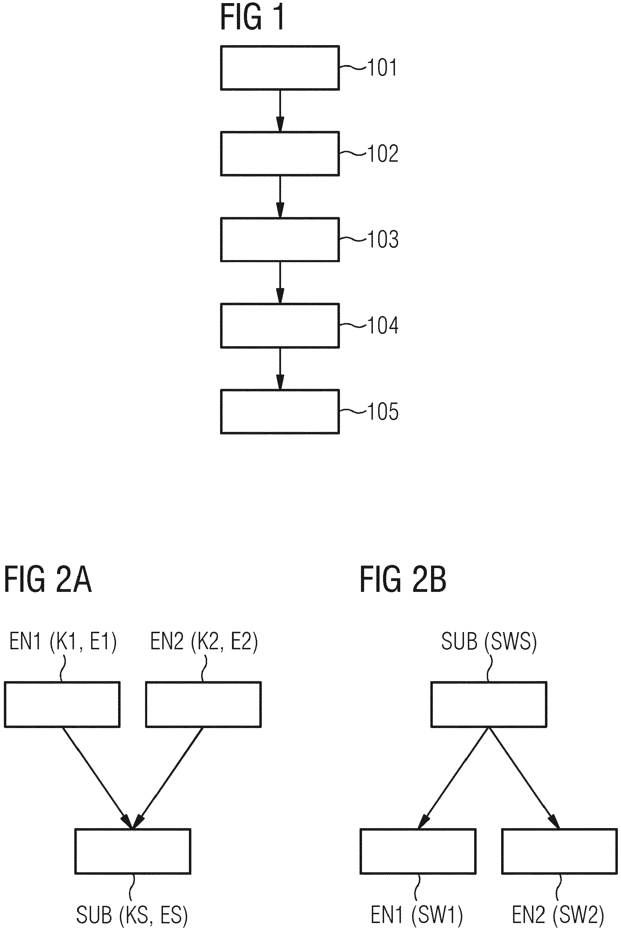

Figur 1 zeigt in schematischer Weise einen beispielhaften Ablauf des Verfahrens zum Erstellen eines Betriebsplans zur Steuerung von Energiekomponenten einer Gebäudeinfrastruktur bzw. eines Energiesystems. Eine derartige Gebäudeinfrastruktur bzw. Energiesystem umfasst üblicherweise zahlreiche Energiekomponenten unterschiedlicher Komponententypen sowie entsprechende Kommunikations- und/oder Steuereinrichtungen für eine entsprechende Steuerung und Regelung der Energiekomponenten. Als Energiekomponenten kann die Gebäudeinfrastruktur bzw. das Energiesystem beispielsweise thermische und/oder elektrische Energieerzeugungseinheiten, welche für die Infrastruktur Energie in Form von Wärme/Kälte und/oder elektrischer Leistung liefern (z.B. Wärmepumpe, Kältesystem, Photovoltaikanlage, Blockheizkraftwerk, etc.), Energiespeichereinheiten (z.B. Wärmespeicher, Batterien, Akkumulatoren, etc.), welche z.B. als steuerbare Lasten (z.B. Speichern und Abgeben von Energie) ausgestaltet sein können, sowie Verbrauchereinheiten (z.B. Heizungseinheiten, elektrische Geräte, etc.) umfassen. Dabei können zumindest einige Energiekomponenten des Energiesystems modular und/oder redundant ausgeführt sein. D.h., in der Gebäudeinfrastruktur sind beispielsweise mehrere Energiekomponenten des gleichen Komponententyps (z.B. Wärmepumpe, Photovoltaikanlage, Batterie, Wärmespeicher) vorgesehen.

Für eine energieeffiziente Steuerung und Regelung der Energiekomponenten der Gebäudeinfrastruktur bzw. des Energiesystems wird mittels eines Energiemanagementsystems üblicherweise für einen festgelegten, zukünftigen Zeithorizont ein Betriebsplan erstellt. Der Betriebsplan kann mittels eines Energiemanagementsystems z.B. für 24 Stunden im Voraus erstellt werden. Dabei wird vom Betriebsplan den jeweiligen Energiekomponenten ein geplanter und/oder voraussichtlicher Energiebedarf im festgelegten, zukünftigen Zeithorizont beschrieben. Weiterhin werden durch den Betriebsplan den jeweiligen Energiekomponenten für eine entsprechende Steuerung Sollwerte vorgegeben. Der Energiebedarf der jeweiligen Energiekomponente kann je nach Komponententyp (z.B. Erzeuger, Speicher, Verbraucher) positiv und/oder negativ sein.

Zum Erstellen des Betriebsplans mittels des Energiemanagementsystem werden dabei die in der Folge beschriebenen Schritte durchlaufen.

In einem Identifikationsschritt 101 werden jene Energiekomponenten der Gebäudeinfrastruktur identifiziert, welche denselben bzw. den identen Komponententyp (z.B. Wärmespeicher, Batterie, Photovoltaikanlage, etc.) aufweisen. Die jeweiligen Energiekomponenten des Energiesystems, welche für einen Komponententyp (z.B. Wärmespeicher, Batterie, Photovoltaikanlage, etc.) identifiziert wurden, werden dann in einem Kombinationsschritt 102 zu einer entsprechenden, zugehörigen Ersatzkomponente mit diesem Komponententyp (z.B. Wärmespeicher, Batterie, Photovoltaikanlage, etc.) zusammengefasst. Beim Zusammenfassen der jeweiligen, identifizierten Energiekomponenten vom identen Komponententyp zur entsprechenden, zugehörigen Ersatzkomponente wird dann zumindest ein kennzeichnender Parameter bzw. eine Kennzahl für die Ersatzkomponente aus entsprechenden Parametern bzw. Kennzahlen der jeweiligen, identifizierten Energiekomponenten abgeleitet.

In einem Reduktionsschritt 103 werden dann die jeweiligen Energiekomponenten, welche als vom selben Komponententyp und damit als zusammenfassbar identifiziert wurden, durch die jeweils im Kombinationsschritt 102 ermittelte, zugehörige Ersatzkomponente mit entsprechend berechneten Parametern bzw. Kennwerten für die Erstellung des Betriebsplans durch das Energiemanagementsystem ersetzt. Auf diese Weise wird die Anzahl der Energiekomponenten für die Erstellung des Betriebsplans und damit die Problemkomplexität des mathematischen Optimierungsproblems, welches für die Erstellung des Betriebsplans gelöst werden muss, erheblich reduziert.

In einem Erstellungsschritt 104 wird dann der Betriebsplan mit Hilfe des Energiemanagementsystems für eine Ersatzenergiesystem erstellt, in welchem die als zusammenfassbar identifizierten Energiekomponenten desselben Komponententyps durch die jeweils zugehörigen Ersatzkomponenten ersetzt sind. Dabei wird beispielsweise die Ermittlung des optimalen Betriebsplans für dieses Ersatzenergiesystem mit Hilfe einer modellprädiktiven Regelung durchgeführt. Beim Erstellen des Betriebsplans im Erstellungsschritt 104 werden weiterhin für die Ersatzkomponenten, zu welchen die jeweiligen, identifizierten Energiekomponenten mit identem Komponententyp zusammengefasst wurden, Sollwerte für eine Steuerung und/oder Regelung einer Energiekomponenten mit dem zumindest einen Parameter bzw. Kennwert der jeweiligen Ersatzkomponente ermittelt. Zum Erstellen des Betriebsplans und zum Ermitteln der Sollwerte für die Ersatzkomponenten können idealerweise historische Energieerzeugungsdaten und/oder Energiebedarfsdaten, Erfahrungswerte und/oder Vorhersagedaten für die jeweilige Energiekomponenten bzw. Komponententypen herangezogen werden.

In einen Ableitungsschritt 105 werden dann aus den Sollwerten der jeweiligen Ersatzkomponenten die Sollwerte für die jeweiligen, identifizierten Energiekomponenten abgeleitet, welche zu den jeweiligen Ersatzkomponenten zusammengefasst wurden. D.h., dass beispielsweise der Sollwert einer Ersatzkomponente aus dem im Erstellungsschritt ermittelten Betriebsplan auf jene Energiekomponenten des identen Komponententyps aufgeteilt wird, welche für die Betriebsplanerstellung im Erstellungsschritt 104 zusammengefasst wurden. Dabei werden gegebenenfalls vorhandene Einschränkungen (z.B. maximal zulässiger Ladezustand, etc.) und/oder Maximal- und/oder Minimalwert von Parametern der jeweiligen Energiekomponente (z.B. maximale Speicherkapazität, maximale Energielieferleistung, Nennwerte, etc.) berücksichtigt. Weiterhin können beim Ableiten der Sollwerte für die einzelnen, in der jeweiligen Ersatzkomponente zusammengefassten Energiekomponenten mit identem Komponententyp eine Alterung und/oder eine Einsatzdauer (z.B. Betriebsstunden, etc.) der jeweiligen Energiekomponente berücksichtigt werden.

In Figur 2a ist beispielhaft und schematisch das Zusammenfassen von Energiekomponenten EN1, EN2 eines Energiesystems, welche einen identen Komponententyp aufweisen, zu einer entsprechenden, zugehörigen Ersatzkomponente SUB dargestellt. Ein derartiges Zusammenfassen wird während des Kombinationsschritts 102 bei der Ermittlung des Betriebsplans durch das Energiemanagementsystem durchgeführt. Die Figur 2a zeigt zwei beispielhafte Energiekomponenten EN1, EN2, welche beiden denselben Komponententyp "Energiespeicher" oder "Batterie" aufweisen. Im Identifikationsschritt 101 wurde die beiden, beispielhaften Energiekomponenten EN1, EN2 als vom selben Komponententyp identifiziert. Die Energiekomponenten EN1, EN2 können daher im Kombinationsschritt 102 zu einer Ersatzkomponente SUB zusammengefasst werden, welche ebenfalls den Komponententyp "Energiespeicher" oder "Batterie" aufweist.

Damit die als zusammenfassbar identifizierten Energiekomponenten EN1, EN2 im Reduktionsschritt 103 für die Ermittlung des Betriebsplans durch die Ersatzkomponente SUB ersetzt werden können, wird im Kombinationsschritt 102 für die Ersatzkomponente SUB zumindest ein entsprechender Parameter KS, ES aus zumindest einem Parameter bzw. Kennwert der als zusammenfassbar identifizierten Energiekomponenten EN1, EN2 berechnet. Dabei weist z.B. eine erste Energiekomponente EN1 des Komponententyps "Batterie", welche mit einer zweiten Energiekomponente EN2 des Komponententyps "Batterie" zur Ersatzkomponente SUB - ebenfalls mit dem Komponententyp "Batterie" zusammengefasst wird, beispielweise als Parameter bzw. Kennwerte eine Speicherkapazität K1 und einen Energieinhalt E1 auf. Die zweite Energiekomponente EN2 weist z.B. als Parameter bzw. Kennwerte eine Speicherkapazität K2 und einen Energieinhalt E2 auf. Aus den Parametern bzw. Kennwerten E1, E2, K1, K2 der beiden Energiekomponenten EN1, EN2 können dann beispielsweise mittels Addition die entsprechenden Parameter - d.h. Speicherkapazität KS, Energieinhalt ES - der zugehörigen Ersatzkomponente SUB berechnet werden, durch welche im Reduktionsschritt 103 die beiden Energiekomponenten EN1, EN2 für die Erstellung des Betriebsplan im Erstellungsschritt 104 ersetzt werden. Weiterhin wird im Erstellungsschritt 104 für die Ersatzkomponente SUB zumindest ein Sollwert SWS - z.B. für einen Energieinhalt ES der Ersatzkomponente - ermittelt.

In Figur 2b ist beispielhaft und schematisch ein Ableiten der Sollwerte SW1, SW2 für die jeweiligen Energiekomponenten EN1, EN2 mit identem Komponententyp des Energiesystems aus dem Sollwert SWS dargestellt, welcher im Betriebsplan bzw. im Erstellungsschritt 104 für die zugehörige Ersatzkomponente SUB ermittelt wurde.

Die Figur 2b zeigt wieder die beiden Energiekomponenten EN1, EN2 vom Komponententyp "Batterie", welche für das Erstellen des Betriebsplans durch das Energiemanagementsystem zu einer zugehörigen Ersatzkomponente SUB mit dem Komponententyp "Batterie" zusammengefasst wurden. Im Erstellungsschritt 104 wurde bei Ermittlung des Betriebsplan der zumindest eine Sollwert SWS (z.B. Sollwert für den Energieinhalt ES) für die Ersatzkomponente SUB bestimmt. Dieser Sollwert SWS wird im Ableitungsschritt 105 derart auf die beiden Energiekomponenten EN1, EN2 des Energiesystems aufgeteilt, dass für die beiden Energiekomponenten EN1, EN2 entsprechende Sollwerte SW1, SW2 - beispielweise für den jeweiligen Energieinhalt E1, E2 der jeweiligen Energiekomponente EN1, EN1 vom Komponententyp "Batterie" erhalten werden.

Dazu kann beispielsweise ein Sollwert SW1 der ersten Energiekomponente EN1 für den Energieinhalt E1 aus dem Sollwert SWS der Ersatzkomponente SUB und einer oder mehrerer, weiterer Parameter bzw. Kennzahlen KS, K1 der Ersatzkomponente SUB und der ersten Energiekomponente EN1 berechnet werden. Ein Sollwert SW2 für die zweite Energiekomponente EN2 für den Energieinhalt E2 kann z.B. analog dazu aus dem Sollwert SWS der Ersatzkomponente SUB und einer oder mehrerer, weiterer Parameter KS, K2 bzw. Kennzahlen der Ersatzkomponente SUB und der zweiten Energiekomponente EN2 bestimmt werden. Die Berechnung der Sollwerte SW1, SW2 der ersten bzw. zweiten Energiekomponente EN1, EN2 für den jeweiligen Energieinhalt E1, E2 kann z.B. als Division des im Betriebsplans ermittelten Sollwerts SWS für den Energieinhalt ES der Ersatzkomponente SUB durch das Produkt aus Kapazität KS der Ersatzkomponente SUB und der jeweiligen Kapazität K1, K2 der jeweiligen Energiekomponente EN1, EN2 berechnet werden.

Bei dieser Berechnung können dann vorhandene Einschränkungen (z.B. maximaler Ladezustand) der jeweiligen Energiekomponente EN1, EN2 sowie Einflüsse von Alterung, Einsatzdauer, etc. auf die jeweilige Energiekomponente bzw. ihre jeweiligen Parameter K1, K2, E1, E2 berücksichtigt werden.

## Patentansprüche

1. Verfahren zum Erstellen eines Betriebsplans zur Steuerung von Energiekomponenten (EN1, EN2) einer Gebäudeinfrastruktur mittels eines Energiemanagementsystems, wobei vom Betriebsplan für die jeweiligen Energiekomponenten (EN1, EN2) ein geplanter und/oder voraussichtlicher Energiebedarf in einem festgelegten, zukünftigen Zeithorizont beschrieben wird und für die Steuerung der Energiekomponenten (EN1, EN2) den jeweiligen Energiekomponenten (EN1, EN2) Sollwerte vorgegeben werden, **dadurch gekennzeichnet, *dass*** zum Erstellen des Betriebsplans folgende Schritte durchlaufen werden:
- Identifizieren (101) von Energiekomponenten (EN1, EN2) der Gebäudeinfrastruktur, welche einen identen Komponententyp aufweisen;
- Zusammenfassen (102) der jeweiligen, mit identem Komponententyp identifizierten Energiekomponenten (EN1, EN2) zu einer jeweils zugehörigen Ersatzkomponente (SUB);
- Ersetzen (103) der jeweiligen, mit identem Komponententyp identifizierten Energiekomponenten (EN1, EN2) durch die jeweils zugehörige Ersatzkomponente (SUB);
- Erstellen (104) des Betriebsplans mittels des Energiemanagementsystems, wobei für jede Ersatzkomponente (SUB), durch welche die jeweiligen, mit identem Komponententyp identifizierten Energiekomponenten (EN1, EN2) ersetzt wurden, zumindest ein Sollwert ermittelt wird; und
- Ableiten (105) der Sollwerte (SW1, SW2) für die jeweiligen, mit identem Komponententyp identifizierten Energiekomponenten (EN1, EN2) aus dem zumindest einen für die jeweils zugehörige Ersatzkomponente (SUB) ermittelten Sollwert (SWS).

2. Verfahren nach Anspruch 1, ***dadurch gekennzeichnet, dass*** beim Zusammenfassen der jeweiligen, mit identem Komponententyp identifizierten Energiekomponenten (EN1, EN2) zur jeweils zugehörigen Ersatzkomponente (SUB) zumindest ein Parameter (KS, ES) der Ersatzkomponente (SUB) aus entsprechenden Parametern (K1, E1, K2, E2) der jeweiligen, mit identem Komponententyp identifizierten Energiekomponenten (EN1, EN2) berechnet wird (102).

3. Verfahren nach einem der Ansprüche 1 bis 2, ***dadurch gekennzeichnet, dass*** beim Ableiten der Sollwerte (SW1, SW2) für die jeweiligen, mit identem Komponententyp identifizierten Energiekomponenten (EN1, EN2) aus dem zumindest einen für die jeweils zugehörige Ersatzkomponente (SUB) ermittelten Sollwert (SWS) eine Alterung der jeweiligen, identifizierten Energiekomponente (EN1, EN2) berücksichtigt wird (105).

4. Verfahren nach einem der vorangegangenen Ansprüche, ***dadurch gekennzeichnet, dass*** beim Ableiten der Sollwerte (SW1, SW2) für die jeweiligen, mit identem Komponententyp identifizierten Energiekomponenten (EN1, EN2) aus dem zumindest einen für die jeweils zugehörige Ersatzkomponente (SUB) ermittelten Sollwert (SWS) eine jeweilige Einsatzdauer der jeweiligen, identifizierten Energiekomponente (EN1, EN2) berücksichtigt wird (105).

5. Verfahren nach einem der vorangegangenen Ansprüche, ***dadurch gekennzeichnet, dass*** das Erstellen des Betriebsplans mittels des Energiemanagementsystems mit Hilfe einer modellprädiktiven Regelung durchgeführt wird (104).

6. Verfahren nach einem der vorangegangenen Ansprüche, ***dadurch gekennzeichnet, dass*** zum Erstellen des Betriebsplans und zum Ermitteln des zumindest einen Sollwerts (SWS) für die jeweiligen Ersatzkomponenten (SUB) mittels des Energiemanagementsystems historische Energieerzeugungsdaten und/oder Energiebedarfsdaten, Erfahrungswerte und/oder Vorhersagedaten der Energiekomponenten (EN1, EN2) herangezogen werden (104).

7. Verfahren nach einem der vorangegangenen Ansprüche, ***dadurch gekennzeichnet, dass*** als Komponententypen der Energiekomponenten (EN1, EN2) der Gebäudeinfrastruktur zumindest thermische und/oder elektrische Energieerzeugungseinheiten und/oder thermische und/oder elektrische Energiespeichereinheiten betrachtet werden.
